# FASCICULE DE BREVET EUROPEEN

(11) **EP 3 343 375 B1**
(45) Date de publication et mention de la délivrance du brevet: **07.08.2019**
(21) Numéro de dépôt: 17211003.3
(22) Date de dépôt: 28.12.2017
(51) Int. Cl.: G06F 11/30, G06F 11/34

(54) **PROCÉDÉ ET SYSTÈME DE SURVEILLANCE DE TRAITEMENTS PAR LOTS D'APPLICATIONS EXÉCUTÉES DANS UNE INFRASTRUCTURE INFORMATIQUE**
EINE METHODE UND EIN SYSTEM ZUR ÜBERWACHUNG DER STAPELVERARBEITUNG VON ANWENDUNGEN, DIE IN DER IT-INFRASTRUKTUR AUSGEFÜHRT WERDEN
A METHOD AND A SYSTEM FOR MONITORING BATCH PROCESSING OF APPLICATIONS EXECUTED IN IT INFRASTRUCTURE

(30) Priorité: 29.12.2016 FR 1663518
(43) Date de publication de la demande: 04.07.2018
(73) Titulaire: BULL SAS, 78340 Les Clayes Sous Bois (FR)
(72) Inventeur: ALVAREZ MARCOS, José Ignacio, 69220 SAINT JEAN D'ARDIERES (FR); DEMEILLIEZ, Bruno, 38410 Saint Martin d'Uriage (FR); ROCHETTE, Florent, 38170 SEYSSINET PARISET (FR)
(74) Mandataire: A.P.I. Conseil

(56) Documents cités:
- US-A1- 2006 048 155
- US-A1- 2014 201 747
- US-A1- 2015 033 233
- JORDÀ POLO ET AL: "Resource-aware adaptive scheduling for MapReduce clusters", NETWORK AND PARALLEL COMPUTING; [LECTURE NOTES IN COMPUTER SCIENCE; LECT.NOTES COMPUTER], SPRINGER INTERNATIONAL PUBLISHING, CHAM, 12 décembre 2011 (2011-12-12), pages 180-199, XP058010522, ISSN: 0302-9743 ISBN: 978-3-540-73000-2

## Description

### DOMAINE TECHNIQUE DE L'INVENTION

La présente invention concerne le domaine de la surveillance d'infrastructures informatiques et plus particulièrement celui des traitements par lots ("batch processing" selon la terminologie anglo-saxonne) dans les applications exécutées au sein de ces infrastructures informatiques. Ces traitement par lot sont présents dans la plupart des applications et sont des enchaînements automatiques de suites de commandes (processus) sur un ordinateur sans intervention d'un utilisateur. Une fois qu'un est terminé (quel que soit le résultat), l'ordinateur traite le lot suivant. Le traitement des lots se termine une fois que tous les lots d'une pile ont été exécutés.

Le déclenchement de ces traitements peut ainsi être automatisé, par exemple grâce à un ordonnanceur. Les traitements par lots doivent être ordonnancés afin de pouvoir éviter les problèmes d'accès concurrents ou pour lisser la charge applicative. Ainsi, l'ordonnanceur a généralement pour objet de s'assurer également de l'ordre de préséance des traitements. En effet, certains traitements ne doivent être effectués que lorsque d'autres traitements sont terminés. Les traitements par lots sont surtout utilisés pour des tâches automatisées, par exemple pour la gestion de comptes sur un parc informatique d'une entité publique ou privée. Les travaux lancés en lots n'utilisent généralement que les cycles processeur non utilisés par les travaux interactifs ou transactionnels. Ils sont généralement exécutés en dehors des plages standards d'utilisation des applications (nuit et week-ends) mais pas uniquement.

### ARRIERE-PLAN TECHNOLOGIQUE DE L'INVENTION

Un problème dans le domaine des traitements par lots des applications est qu'il s'agit souvent de traitements longs et critiques qui sont nécessaires pour garantir le bon fonctionnement de l'application pendant la production, c'est-à-dire pour les utilisateurs pendant leurs horaires de travail. En particulier, l'exécution des traitements par lots entraînent parfois une congestion au niveau des ressources de l'infrastructure informatique, ce qui met en péril le fonctionnement de l'application en production. Un tel incident de congestion se caractérise souvent par la saturation d'une ou plusieurs ressources sur un ou plusieurs serveurs et une augmentation importante de leur durée du fait de la congestion d'une ressource. Du fait de l'allongement du temps d'exécution, il arrive dans certains cas que l'ensemble des traitements ne puissent pas s'exécuter dans le temps imparti. Dans certains cas, la production doit même être arrêtée si les traitements n'ont pas pu se dérouler en temps voulu. Ainsi, lorsque des incidents surviennent en production, une analyse doit être réalisée pour en déterminer l'origine. Un problème particulier concerne le fait que cette analyse est difficile, notamment lorsqu'un incident est lié aux traitements par lots car les seules informations disponibles sont généralement celles liées aux mécanismes d'ordonnancement. Diverses solutions, comme par exemple dans les demandes de brevet US2014/201747A1, US2015/0033233A1 et US2006/0048155A1, sont connues de l'art antérieur. La première décrit l'ordonnancement et le suivi en temps réel de traitements par lots. La seconde concerne l'identification de traitements par lots dont l'exécution est retardée.

Dans ce contexte, il est intéressant de proposer une solution proposant des outils pour la surveillance des traitements par lots et permettant un diagnostic identifiant le traitement ou les traitements susceptible(s) d'en être à l'origine des incidents de congestion qui surviennent en production.

### DESCRIPTION GENERALE DE L'INVENTION

Un but de la présente invention est de pallier certains inconvénients de l'art antérieur en proposant un procédé permettant le diagnostic des incidents de congestion dans les infrastructures informatiques.

Ce but est atteint par un procédé selon la revendication 1.

D'autres particularités et avantages de la présente invention sont détaillées dans les revendications dépendantes.

Un autre but de la présente invention est de pallier certains inconvénients de l'art antérieur en proposant un système permettant le diagnostic des incidents de congestion dans les infrastructures informatiques.

Ce but est atteint par un système de surveillance de traitements par lots, dits batchs, d'applications exécutées dans une infrastructure informatique, selon un calendrier de planification déterminé par un ordonnanceur, le système étant caractérisé en ce qu'il comporte des moyens informatiques sur lesquels est exécuté un logiciel de surveillance configuré pour la détection d'au moins un évènement, dit incident, de congestion des ressources informatiques de ladite infrastructure et pour l'identification d'au moins un batch susceptible de participer à la cause dudit incident, grâce à la mise en oeuvre du procédé selon l'invention.

Un autre but de la présente invention est de pallier certains inconvénients de l'art antérieur en proposant un programme permettant le diagnostic des incidents de congestion dans les infrastructures informatiques.

Ce but est atteint par un produit programme d'ordinateur, stocké sur un support lisible par des moyens informatiques et contenant des instructions exécutables par ces moyens informatiques pour la mise en oeuvre du procédé selon l'invention.

### DESCRIPTION DES FIGURES ILLUSTRATIVES

D'autres particularités et avantages de la présente invention apparaîtront plus clairement à la lecture de la description ci-après, faite en référence aux dessins annexés, dans lesquels :

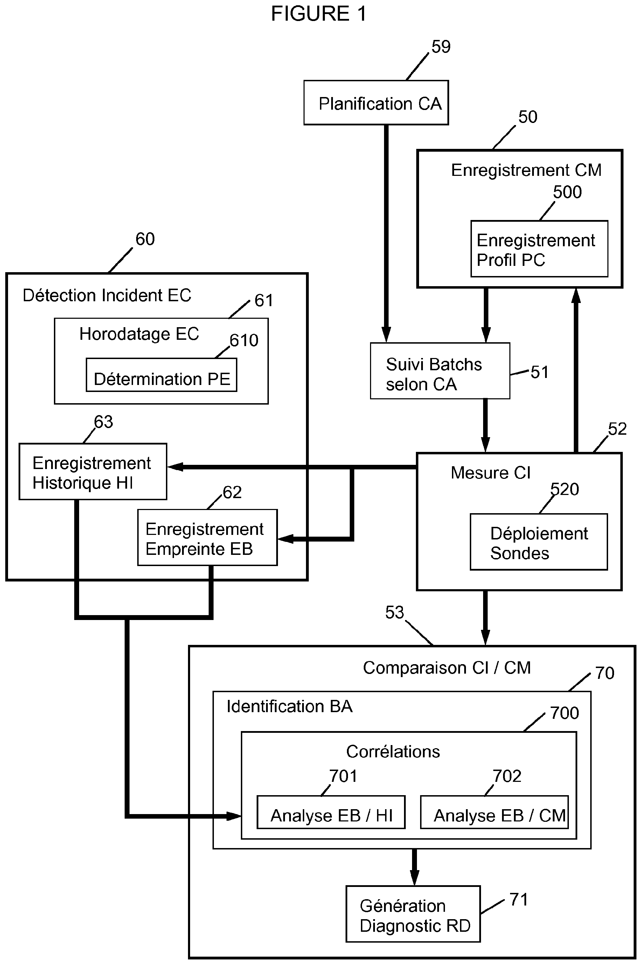

- la figure 1 représente les étapes d'un procédé selon un mode de réalisation de l'invention.
- la figure 2 représente un système selon un mode de réalisation de l'invention.

### DESCRIPTION DES MODES DE REALISATION PREFERES DE L'INVENTION

La présente invention concerne un procédé et un système de surveillance de traitements par lots d'applications exécutées dans une infrastructure informatique, ainsi qu'un produit programme d'ordinateur pour la mise en oeuvre du procédé.

Les termes « ordonnanceur » et « calendrier de planification (CA) » sont utilisés dans la présente description dans leur acception signifiant, respectivement, « programme d'ordonnancement » et « planification temporelle d'exécution » ou tout équivalent à la portée de l'homme de métier et ils ne doivent pas être interprétés de façon limitative au-delà des fonctionnalités auxquelles ils réfèrent.

La présente demande concerne en outre un procédé de surveillance de traitements par lots, dits batchs (BA), d'applications exécutées dans une infrastructure informatique (FW), selon un calendrier de planification (CA) déterminé par un ordonnanceur. Ce procédé est généralement mis en oeuvre par un logiciel de surveillance (LS) configuré pour, d'une part, la détection (60) d'au moins un évènement, dit incident (EC), de congestion des ressources informatiques de ladite infrastructure (FW) et, d'autre part, pour l'identification (70) d'au moins un batch (BA) susceptible de participer à la cause dudit incident (EC). De préférence, cette détection (60) et cette identification (70) sont obtenues grâce à la mise en oeuvre des étapes suivantes :
- enregistrement (50), dans une mémoire accessible par le logiciel de surveillance (LS), de données représentatives de la consommation habituelle (CM) des ressources informatiques de ladite infrastructure (FW) par les batchs (BA) au cours du temps, à partir des données représentatives dudit calendrier de planification (CA) ;
- suivi (51) de l'exécution de l'ensemble des batchs (BA) au cours du temps, grâce aux données représentatives dudit calendrier de planification (CA) ;
- mesure (52), par un outil de surveillance (SU), de la consommation instantanée (CI) des ressources informatiques de ladite infrastructure (FW) au cours du temps ;
- comparaison (53), pour chacun des batchs (BA) exécutés pendant une période (PE) proche de l'incident (EC) détecté, entre les données représentatives de la consommation instantanée (CI) et les données représentatives de la consommation habituelle (CM), pour permettre ladite identification (70).

Dans certains modes de réalisation, l'étape d'enregistrement (50) des données représentatives de la consommation habituelle (CM) des ressources informatiques comporte une étape d'enregistrement (500), pour chacun des batchs (BA), d'un profil de consommation (PC) des ressources sur toute la durée d'exécution du batch. En effet, la consommation de ressources n'étant pas constante sur la période d'exécution, il est nécessaire de prendre en compte la consommation des ressources sur toute la durée d'exécution du batch. Dans certains modes de réalisation, les données représentatives de la consommation habituelle (CM) comportent par exemple des données représentatives d'informations comme la consommation de puissance de processeur, la mémoire utilisée et/ou libre, la quantité d'entrées/sortie du réseau et/ou des mémoire de stockage, des processus s'exécutant sur la machine, etc.

Dans certains modes de réalisation, l'étape de détection (60) d'au moins un incident (EC) des ressources informatiques de ladite infrastructure (FW) déclenche un horodatage (61) dudit incident (EC). Dans certains modes de réalisation, cet horodatage (61) dudit incident (EC) est suivie d'une détermination (610) de la période (PE) de temps proche de cet évènement, par le logiciel de surveillance (LS), cette période pouvant être étendue à un intervalle de temps précédant et/ou succédant à l'événement.

Dans certains modes de réalisation, l'étape de détection (60) d'au moins un incident (EC), par le logiciel de surveillance (LS), déclenche un enregistrement (62), dans une mémoire accessible par le logiciel de surveillance (LS), d'une empreinte (EB) pour chacun des batchs (BA) exécutés pendant ladite période (PE) proche de l'incident (EC), grâce notamment aux données obtenues lors de l'étape de mesure (52) de la consommation instantanée (CI). De préférence, lors de cet enregistrement (62) de l'empreinte (EB) des batchs (BA), le logiciel de surveillance (LS) utilise les informations issues de la mesure (52) de la consommation instantanée (CI) par l'outil de surveillance (SU), afin de générer une empreinte réelle plutôt que de se baser sur le calendrier (CA) et donc une estimation moins précise de l'utilisation des ressources. Dans certains modes de réalisation, les données représentatives d'une telle empreinte (EB) comportent par exemple des données représentatives d'informations telles que : Un ensemble de consommation de ressources, un horodatage, des données d'entrée/sortie, mais aussi potentiellement d'un profil de consommation de ressources (PC), par exemple obtenu via l'étape d'enregistrement (50) de la consommation habituelle (CM). De plus, les données d'entrée/sortie peuvent être de différentes formes, comme par exemple des fichiers utilisés ou générés, des bases de données, des données en provenance du réseau (intranet, extranet, internet...), etc.

Dans certains modes de réalisation, l'étape de détection (60) d'au moins un incident (EC), par le logiciel de surveillance (LS), déclenche un enregistrement (63), dans une mémoire accessible par le logiciel de surveillance (LS), d'un historique d'incidents (HI), grâce notamment aux données obtenues lors de l'étape de mesure (52) de la consommation instantanée (CI). Dans certains modes de réalisation, les données représentatives de cet historique d'incidents (HI) comportent par exemple des données représentatives d'informations telles que l'horodatage, le contexte des batchs s'exécutant sur la période de l'incident, un ensemble de consommation de ressources, mais aussi potentiellement également un diagnostic (RD) issu de l'identification (70) obtenue lors d'une analyse d'un incident antérieur.

Dans certains modes de réalisation, l'étape de comparaison (53) entre les données représentatives de la consommation instantanée (CI) et les données représentatives de la consommation habituelle (CM), par le logiciel de surveillance (LS), permet ladite identification (70) d'au moins un batch (BA) susceptible de participer à la cause dudit incident (EC). Cette étape de comparaison (53) peut notamment correspondre à au moins un calcul d'une variable identifiant un niveau d'utilisation de ressources par chaque batch, par exemple pour une comparaison par rapport à un seuil ou à une valeur moyenne habituelle. De préférence, ladite identification (70) d'au moins un batch (BA) susceptible de participer à la cause dudit incident (EC) repose sur au moins une corrélation (700) entre des données relatives à l'incident (EC) détecté et en cours d'analyse et des données relatives à un incident antérieur. Dans certains modes de réalisation, ladite corrélation (700) comporte au moins une des étapes suivantes:
- analyse comparative (701) entre les données représentatives de l'empreinte (EB) des batchs et les données représentatives de l'historique des incidents (HI);
- analyse comparative (702) entre les données représentatives de l'empreinte (EB) des batchs et les données représentatives de la consommation habituelle (CM).

Dans certains modes de réalisation, l'étape d'identification (70) obtenue lors d'une analyse d'un incident (EC) déclenche la génération (71), par le logiciel de surveillance (LS), d'un rapport de diagnostic (RD) permettant de fournir une aide à l'analyse et/ou à la décision pour un utilisateur du logiciel de surveillance (LS) afin de déterminer les mesures à prendre pour éviter d'autres incidents (CE) lors de l'exécution future des batchs (BA) et éventuellement modifier en conséquence le calendrier (CA). En effet, le rapport de diagnostic peut par exemple se présenter sous la forme d'un tableau synthétique de l'utilisation des ressources, montrant par exemple les niveaux d'utilisation par rapport à la consommation habituelle. Ce type de rapport ou tableau pourra mettre en avant les ressources qui sont caractéristiques de l'incident, par exemple en listant les caractéristiques de l'incident détecté. Ainsi, chaque batch qui peut être impliqué dans l'incident peut être identifié par un utilisateur qui accède aux informations relatives aux ressources qui ont fait défaut lors de la congestion, ce qui permet de modifier le calendrier de planification des batchs ou même revoir l'organisation de l'infrastructure informatique.

Dans certains modes de réalisation, l'étape de mesure (52) de la consommation instantanée (CI) est effectuée grâce à un déploiement (520) préalable d'une pluralité de sondes mesurant divers paramètres dont l'outil de surveillance (SU) transmet les données représentatives des valeurs ainsi mesurées au logiciel de surveillance (LS). Pour surveiller une infrastructure (FW) informatique, il est généralement préférable de déployer plusieurs sondes, souvent gérées par plusieurs outils spécifiques, qui surveillent chacun au moins un paramètre parmi divers types de paramètres (généralement physiques) tels que, par exemple, la consommation de puissance de processeur, la mémoire utilisée et/ou libre, la quantité d'entrées/sortie du réseau et/ou des mémoire de stockage, des processus s'exécutant sur la machine, etc. Le logiciel de surveillance (LS) pourra être configuré pour, soit communiquer directement avec cet outil de surveillance (SU), soit accéder ultérieurement aux données mesurées par cet outil de surveillance (SU).

Dans certains modes de réalisation, les données générées lors de l'étape de mesure (52) de la consommation instantanée (CI) sont utilisées par le logiciel de surveillance (LS) pour le calcul des données stockées lors l'étape d'enregistrement (50) de la consommation habituelle (CM).

Dans certains modes de réalisation, l'étape de suivi (51) de l'exécution des batchs (BA) au cours du temps, grâce aux données représentatives dudit calendrier de planification (CA), est obtenue suite à une étape préalable de planification (59), par un utilisateur du logiciel de surveillance (LS), permettant à ce dernier d'enregistrer des données représentatives du calendrier (CA).

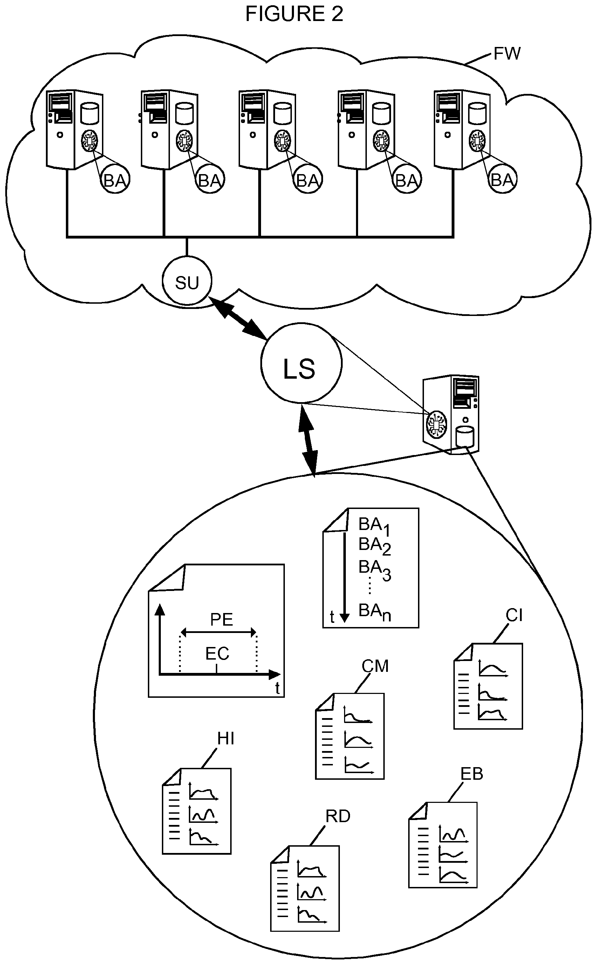

La présente demande concerne donc également un système de surveillance de traitements par lots. Ce système comporte des moyens informatiques sur lesquels est exécuté un logiciel de surveillance (LS) configuré pour la mise en oeuvre du procédé selon divers modes de réalisation de l'invention. Comme représenté sur la figure 2, de tels moyens informatiques peuvent être distincts de ceux présents dans l'infrastructure informatique (FW) surveillée grâce à une communication entre eux, et notamment entre le logiciel de surveillance et un outil de surveillance (SU) présent dans l'infrastructure informatique (FW), mais il est bien entendu possible de l'exécuter au sein de cette infrastructure informatique (FW). Ces moyens informatiques et les ressources informatiques de ladite infrastructure (FW) comportent naturellement au moins un processeur et au moins une mémoire ou base de données, par exemple implémentés dans des serveurs communiquant entre eux. D'autre part, la présente demande concerne également un produit programme d'ordinateur, stocké sur un support lisible par des moyens informatiques et contenant des instructions exécutables par ces moyens informatiques pour la mise en oeuvre du procédé selon l'invention. Ainsi, les fonctionnalités proposées par le procédé peuvent être déployées sur divers moyens informatiques afin de surveiller diverses infrastructures informatiques (FW).

## Revendications

1. Procédé de surveillance de traitements par lots, dits batchs (BA), d'applications exécutées dans une infrastructure informatique (FW), selon un calendrier de planification (CA) déterminé par un ordonnanceur, le procédé étant mis en oeuvre par un logiciel de surveillance (LS) réalisant :
• une détection (60) d'au moins un évènement, dit incident (EC), de congestion des ressources informatiques de ladite infrastructure (FW), cette détection (60) déclenchant un horodatage (61) dudit incident (EC), suivi d'une détermination (610) d'une période (PE) de temps proche de cet évènement, cette période pouvant être étendue à un intervalle de temps précédant et/ou succédant à l'évènement ;
• puis une identification (70) d'au moins un batch (BA) susceptible de participer à la cause dudit incident (EC),
le procédé étant tel que :
• il comporte une mesure (52), par une pluralité de sondes gérées par un outil de surveillance (SU), de la consommation instantanée (CI) des ressources informatiques de ladite infrastructure (FW) au cours du temps, pour chacun des batchs (BA) exécutés ;
• ladite détection (60) d'au moins un incident (EC) déclenche un enregistrement (62), dans une mémoire accessible par le logiciel de surveillance (LS), d'une empreinte (EB) représentative de la consommation des ressources mesurée pour chacun des batchs (BA) exécutés pendant ladite période (PE) proche de l'incident (EC), grâce notamment aux données obtenues lors de l'étape de mesure (52) de la consommation instantanée (CI) ;
• ladite identification (70) est obtenue grâce à la mise en oeuvre des étapes suivantes :
- enregistrement (50), dans une mémoire accessible par le logiciel de surveillance (LS), de données représentatives de la consommation habituelle (CM) des ressources informatiques de ladite infrastructure (FW) par les batchs (BA) au cours du temps, cet enregistrement (50) comportant une étape d'enregistrement (500), pour chacun des batchs (BA), d'un profil de consommation (PC) des ressources sur toute la durée d'exécution du batch ;
- suivi (51) de l'exécution de l'ensemble des batchs (BA) au cours du temps, grâce aux données représentatives dudit calendrier de planification (CA) ;
- comparaison (53), pour chacun des batchs (BA) exécutés pendant une période (PE) proche de l'incident (EC) détecté, entre les données représentatives de la consommation instantanée (CI) mesurée et les données représentatives de la consommation habituelle (CM).

2. Procédé selon la revendication 1, **caractérisé en ce que** l'étape d'identification (70) obtenue lors d'une analyse d'un incident (EC) déclenche la génération (71), par le logiciel de surveillance (LS), d'un rapport de diagnostic (RD) permettant de fournir une aide à l'analyse et/ou à la décision pour un utilisateur du logiciel de surveillance (LS) afin de déterminer les mesures à prendre pour éviter d'autres incidents (CE) lors de l'exécution future des batchs (BA) et éventuellement modifier en conséquence le calendrier (CA).

3. Procédé selon une des revendications 1 et 2, **caractérisé en ce que** l'étape de détection (60) d'au moins un incident (EC), par le logiciel de surveillance (LS), déclenche un enregistrement (63), dans une mémoire accessible par le logiciel de surveillance (LS), d'un historique d'incidents (HI), grâce notamment aux données obtenues lors de l'étape de mesure (52) de la consommation instantanée (CI).

4. Procédé selon la revendication 3, **caractérisé en ce que** ladite identification (70) d'au moins un batch (BA) susceptible de participer à la cause dudit incident (EC) repose sur au moins une corrélation (700) entre des données relatives à l'incident (EC) détecté et en cours d'analyse et des données relatives à un incident antérieur.

5. Procédé selon la revendication 4, **caractérisé en ce que** ladite corrélation (700) comporte au moins une des étapes suivantes:
- analyse comparative (701) entre les données représentatives de l'empreinte (EB) des batchs et les données représentatives de l'historique des incidents (HI);
- analyse comparative (702) entre les données représentatives de l'empreinte (EB) des batchs et les données représentatives de la consommation habituelle (CM).

6. Procédé selon une des revendications 1 à 5, **caractérisé en ce que** l'étape de mesure (52) de la consommation instantanée (CI) est effectuée grâce à un déploiement (520) préalable de ladite pluralité de sondes mesurant divers paramètres de la consommation instantanée (CI) des ressources informatiques de ladite infrastructure (FW) au cours du temps, pour chacun batchs (BA) exécutés, ledit outil de surveillance (SU) desdites sondes transmettant les données représentatives des valeurs ainsi mesurées au logiciel de surveillance (LS).

7. Procédé selon une des revendications 1 à 6, **caractérisé en ce que** les données générées lors de l'étape de mesure (52) de la consommation instantanée (CI) sont utilisées par le logiciel de surveillance (LS) pour le calcul des données stockées lors de l'étape d'enregistrement (50) de la consommation habituelle (CM).

8. Procédé selon une des revendications 1 à 7, **caractérisé en ce que** l'étape de suivi (51) de l'exécution des batchs (BA) au cours du temps , grâce aux données représentatives dudit calendrier de planification (CA), est obtenue suite à une étape préalable de planification (59), par un utilisateur du logiciel de surveillance (LS), permettant à ce dernier d'enregistrer des données représentatives du calendrier (CA).

9. Système de surveillance de traitements par lots, dits batchs (BA), d'applications exécutées dans une infrastructure informatique (FW), selon un calendrier de planification (CA) déterminé par un ordonnanceur (ORD), le système étant tel qu'il comporte des moyens informatiques sur lesquels est exécuté un logiciel de surveillance (LS) configuré pour la détection (60) d'au moins un évènement, dit incident (EC), de congestion des ressources informatiques de ladite infrastructure (FW) et pour l'identification (70) d'au moins un batch (BA) susceptible de participer à la cause dudit incident (EC), grâce à la mise en oeuvre du procédé selon l'une des revendications 1 à 8.

10. Produit programme d'ordinateur, stocké sur un support lisible par des moyens informatiques et contenant des instructions exécutables par ces moyens informatiques pour la mise en oeuvre du procédé selon l'une des revendications 1 à 8.

## Patentansprüche

1. Verfahren zum Überwachen von Stapelverarbeitungen, der sogenannten Batchverarbeitungen (BA), von Anwendungen, die in einer IT-Infrastruktur (FW) gemäß einem von einem Scheduler bestimmten Planungskalender (CA) ausgeführt werden, wobei das Verfahren von einer Überwachungssoftware (LS) durchgeführt wird, die Folgendes vornimmt:
• eine Erkennung (60) zumindest eines Ereignisses, des sogenannten Störfalls (EC), einer Überlastung der IT-Ressourcen der Infrastruktur (FW), wobei diese Erkennung (60) einen Zeitstempel (61) des Störfalls (EC) auslöst, woraufhin eine Bestimmung (610) eines Zeitraums (PE) nahe an diesem Störfall erfolgt, wobei dieser Zeitraum auf ein Zeitintervall vor und/oder nach dem Ereignis ausgedehnt werden kann;
• Anschließend eine Identifizierung (70) von zumindest einem Batch (BA), der an der Ursache des Störfalls (EC) beteiligt sein kann,
wobei das Verfahren dergestalt ist, dass:
• es eine Messung (52) des momentanen Verbrauchs (CI) der IT-Ressourcen der Infrastruktur (FW) im Verlauf der Zeit durch eine Mehrzahl von Sonden umfasst, die von einem Überwachungswerkzeug (SU) für jeden der ausgeführten Batches (BA) verwaltet werden;
• die Erkennung (60) zumindest eines Störfalls (EC) eine Aufzeichnung (62) eines Abdrucks (EB) in einem für die Überwachungssoftware (LS) zugänglichen Speicher auslöst, der für den gemessenen Verbrauch der Ressourcen für jeden der Batches (BA) repräsentativ ist, die während des Zeitraums (PE) nahe am Störfall (EC) ausgeführt werden, insbesondere durch die Daten, die während des Messschritts (52) des momentanen Verbrauchs (CI) erzielt werden;
• die Identifizierung (70) durch Ausführen der folgenden Schritte erzielt wird:
- Aufzeichnung (50) von Daten in einem für die Überwachungssoftware (LS) zugänglichen Speicher, die den üblichen Verbrauch (CM) der IT-Ressourcen der Infrastruktur (FW) durch die Batches (BA) im Verlauf der Zeit darstellen, wobei diese Aufzeichnung (50) einen Schritt mit Aufzeichnung (500) eines Verbrauchsprofils (PC) der Ressourcen über die gesamte Ausführungszeit der Batches für jeden der Batches (BA) umfasst;
- Überwachung (51) der Ausführung aller Batches (BA) im Zeitverlauf durch die repräsentativen Daten des Planungskalenders (CA);
- Für jeden der während eines Zeitraums (PE) nahe am erkannten Störfall (EC) ausgeführten Batches (BA) Vergleich (53) zwischen den für den gemessenen momentanen Verbrauch (CI) repräsentativen Daten und denjenigen, die den üblichen Verbrauch (CM) darstellen.

2. Verfahren nach Anspruch 1, **dadurch gekennzeichnet, dass** der bei einer Analyse eines Störfalls (EC) erhaltene Identifikationsschritt (70) die Erzeugung (71) eines Diagnoseberichts (RD) durch die Überwachungssoftware (LS) auslöst, damit einem Benutzer der Überwachungssoftware (LS) eine Analyse- und/oder eine Entscheidungshilfe geboten werden kann, um die zu ergreifenden Maßnahmen zur Vermeidung weiterer Störfälle (EC) bei der zukünftigen Ausführung der Batches (BA) zu bestimmen und gegebenenfalls den Zeitplan (CA) entsprechend zu ändern.

3. Verfahren nach einem beliebigen der vorstehenden Ansprüche 1 und 2, **dadurch gekennzeichnet, dass** der Schritt des Erkennens (60) zumindest eines Störfalls (EC) durch die Überwachungssoftware (LS) eine Aufzeichnung (63) einer Störfallhistorie (HI) in einem für die Überwachungssoftware (LS) zugänglichen Speicher auslöst, und dies insbesondere durch die während des Schritts der Messung (52) des momentanen Verbrauchs (CI) erhaltenen Daten.

4. Verfahren nach Anspruch 3, **dadurch gekennzeichnet, dass** die Identifizierung (70) zumindest eines Batches (BA), der wahrscheinlich an der Ursache des Störfalls (EC) beteiligt ist, auf zumindest einer Korrelation (700) zwischen Daten, die sich auf den erkannten und analysierten Störfall (EC) beziehen, und Daten, die sich auf einen früheren Störfall beziehen, basiert.

5. Verfahren nach Anspruch 4, **dadurch gekennzeichnet, dass** die Korrelation (700) zumindest einen der folgenden Schritte umfasst:
- Vergleichsanalyse (701) der für den Abdruck (EB) der Batches repräsentativen und der für die Störfallhistorie (HI) repräsentativen Daten (EB);
- Vergleichsanalyse (702) der für den Abdruck (EB) der Batches repräsentativen und der für den üblichen Verbrauch (CM) repräsentativen Daten.

6. Verfahren nach einem beliebigen der vorstehenden Ansprüche 1 bis 5, **dadurch gekennzeichnet, dass** der Schritt mit Messung (52) des momentanen Verbrauchs (CI) mittels einer vorherigen Bereitstellung (520) der Mehrzahl von Sonden durchgeführt wird, die verschiedene Parameter des momentanen Verbrauchs (CI) der IT-Ressourcen der Infrastruktur (FW) im Laufe der Zeit für jeden ausgeführten Batch (BA) messen, wobei das Überwachungswerkzeug (SU) der Sonden die für die so gemessenen Werte repräsentativen Daten an die Überwachungssoftware (LS) sendet.

7. Verfahren nach einem beliebigen der vorstehenden Ansprüche 1 bis 6, **dadurch gekennzeichnet, dass** die beim Schritt mit Messung (52) des momentanen Verbrauchs (CI) erzeugten Daten von der Überwachungssoftware (LS) verwendet werden, um die im Aufzeichnungsschritt (50) des üblichen Verbrauchs (CM) gespeicherten Daten zu berechnen.

8. Verfahren nach einem der Ansprüche 1 bis 7, **dadurch gekennzeichnet, dass** der Schritt mit Überwachen (51) der Ausführung der Batches (BA) im Laufe der Zeit unter Verwendung von für den Planungskalender (CA) repräsentativen Daten nach einem vorherigen Planungsschritt (59) durch einen Benutzer der Überwachungssoftware (LS) erzielt wird, der es diesem ermöglicht, Daten aufzuzeichnen, die den Kalender (CA) darstellen.

9. System zum Überwachen von Stapelverarbeitungen, der sogenannten Batchverarbeitungen (BA), von Anwendungen, die in einer IT-Infrastruktur (FW) gemäß einem von einem Scheduler (ORD) bestimmten Planungskalender (CA) ausgeführt werden, wobei das System dergestalt ist, dass es IT-Mittel beinhaltet, auf denen eine Überwachungssoftware (LS) ausgeführt wird, die für die Erkennung (60) von zumindest einem Ereignis, dem sogenannten Störfall (EC), konfiguriert ist, der Überlastung der IT-Ressourcen der Infrastruktur (FW) und für die Identifizierung (70) zumindest eines Batches (BA), der wahrscheinlich an der Ursache des Störfalls (EC) beteiligt ist, durch die Durchführung des Verfahrens nach einem beliebigen der vorstehenden Ansprüche 1 bis 8.

10. Rechnerprogrammprodukt, das auf einem mit IT-Mitteln lesbaren Träger gespeichert ist und Anweisungen enthält, die mit diesen IT-Mitteln ausführbar sind, um das Verfahren nach einem beliebigen der vorstehenden Ansprüche 1 bis 8 durchzuführen.

## Claims

1. A method for monitoring batch processing (BA) of applications executed in a computer infrastructure (FW), according to a planning calendar (CA) determined by a scheduler, the method being implemented by a monitoring software (LS) performing:
• a detection (60) of at least one event, called incident (EC), of congestion of the computing resources of said infrastructure (FW), this detection (60) triggering a timestamp (61) of said incident (EC), followed by a determination (610) of a period (PE) of time close to this event, this period being able to be extended at a time interval preceding and/or succeeding the event;
• then an identification (70) of at least one batch (BA) likely to be involved in the cause of said incident (EC),
the method being such that:
• it includes a measurement (52), by a plurality of probes managed by a monitoring tool (SU), of the instantaneous consumption (CI) of the computing resources of the said infrastructure (FW) over time, for each of the batches (BA) executed;
• said detection (60) of at least one incident (EC) triggers a recording (62), in a memory accessible by the monitoring software (LS), of a footprint (EB) representative of the consumption of the measured resources for each of the batches (BA) executed during said period (PE) close to the incident (EC), in particular thanks to the data obtained during the step (52) of measuring the instantaneous consumption (CI);
• said identification (70) is obtained through the implementation of the following steps:
- recording (50), in a memory accessible by the monitoring software (LS), data representative of the usual consumption (CM) of the computing resources of said infrastructure (FW) by batches (BA) over time, this recording (50) including a step of recording (500), for each of the batches (BA), a profile of consumption (PC) of the resources over the entire duration of execution of the batch;
- monitoring (51) the execution of all the batches (BA) over time, thanks to the data representative of said planning calendar (CA) ;
- comparing (53), for each of the batches (BA) executed during a period (PE) close to the incident (EC) detected, between the data representative of the measured instantaneous consumption (CI) and the data representative of the usual consumption (CM).

2. The method according to claim 1, **characterized in that** the identification step (70) obtained during an analysis of an incident (EC) triggers the generation (71), by the monitoring software (LS), of a diagnostic report (RD) allowing to provide analysis and/or decision support for a user of the monitoring software (LS) in order to determine the measurements to be taken to avoid other incidents (EC) during the future execution of the batches (BA) and possibly modify the calendar (CA) accordingly.

3. The method according to any of claims 1 and 2, **characterized in that** the step of detecting (60) at least one incident (EC), by the monitoring software (LS), triggers a recording (63), in a memory accessible by the monitoring software (LS), of a history of incidents (HI), thanks in particular to the data obtained during the step of measuring (52) the instantaneous consumption (CI).

4. The method according to claim 3, **characterized in that** said identification (70) of at least one batch (BA) likely to be involved in the cause of said incident (EC) is based on at least one correlation (700) between data relating to the incident (EC) detected and being analyzed and data relating to a previous incident.

5. The method according to claim 4, **characterized in that** said correlation (700) includes at least one of the following steps:
- comparative analysis (701) between the data representative of the footprint (EB) of the batches and the data representative of the history of the incidents (HI);
- comparative analysis (702) between the data representative of the footprint (EB) of the batches and the data representative of the usual consumption (CM).

6. The method according to any of claims 1 to 5, **characterized in that** the step of measuring (52) the instantaneous consumption (CI) is carried out through a prior deployment (520) of said plurality of probes measuring various parameters of the instantaneous consumption (CI) of the computing resources of said infrastructure (FW) over time, for each of the batches (BA) executed, said monitoring tool (SU) of said probes transmitting the data representative of the values thus measured to the monitoring software (LS).

7. The method according to any of claims 1 to 6, **characterized in that** the data generated during the step of measuring (52) the instantaneous consumption (CI) are used by the monitoring software (LS) for the calculation of data stored during the step of recording (50) the usual consumption (CM).

8. The method according to any of claims 1 to 7, **characterized in that** the step of monitoring (51) the execution of the batches (BA) over time, thanks to the data representative of said planning calendar (CA), is obtained following a prior planning step (59), by a user of the monitoring software (LS), allowing the latter to record data representative of the calendar (CA).

9. A system for monitoring batch processing (BA) of applications executed in a computer infrastructure (FW), according to a planning calendar (CA) determined by a scheduler (ORD), the system being such that it includes computer means on which is run a monitoring software (LS) configured for the detection (60) of at least one event, called incident (EC), of congestion of the computing resources of said infrastructure (FW) and for the identification (70) of at least one batch (BA) likely to be involved in the cause of said incident (EC), through the implementation of the method according to any of claims 1 to 8.

10. A computer program product, stored on a medium readable by computer means and containing instructions executable by these computer means for implementing the method according to any of claims 1 to 8.
